# EUROPÄISCHE PATENTSCHRIFT

(11) **EP 1 329 381 B1**
(45) Veröffentlichungstag und Bekanntmachung des Hinweises auf die Patenterteilung: **26.10.2005**
(21) Anmeldenummer: 03000724.9
(22) Anmeldetag: 13.01.2003
(51) Int. Cl.: B64D 13/06

(54) **Flugzeugklimaanlage**
Aircraft air conditioning system
Système de climatisation pour aéronef

(30) Priorität: 16.01.2002 DE 10201427
(43) Veröffentlichungstag der Anmeldung: 23.07.2003
(73) Patentinhaber: Liebherr-Aerospace Lindenberg GmbH, 88161 Lindenberg/Allgäu (DE)
(72) Erfinder: Haas, Joachim, 88239 Wangen (DE); Sauterleute, Alfred, 88178 Heimenkirch (DE)
(74) Vertreter: Laufhütte, Dieter

(56) Entgegenhaltungen:
- EP-A- 1 099 628
- EP-A- 1 112 930
- DE-A- 19 935 918
- US-A- 4 963 174
- US-A- 5 906 111
- US-A- 6 128 909

## Beschreibung

Die vorliegende Erfindung betrifft eine Flugzeugklimaanlage, die mit Luft als Prozessmedium betrieben wird, mit von Prozessluft durchströmter Entspannungsstufe, Kondensor und Wasserabscheider, der der Entspannungsstufe vorgeschaltet ist.

Derartige Systeme sind in unterschiedlichen Ausführungsformen bekannt. Sie dienen dazu, die der Kabine beispielsweise eines Flugzeuges zugeführte Luft zu entfeuchten. Die Entfeuchtung der Prozessluft ist insbesondere dann notwendig, wenn sich das Flugzeug in niedrigen Flughöhen befindet oder wenn die Klimaanlage im Bodenbetrieb läuft. Für diesen Hochdruck- oder Niederdruckentfeuchtungsprozess wird bei allen bekannten Systemen indirekt oder direkt kalte Turbinenauslassluft verwendet.

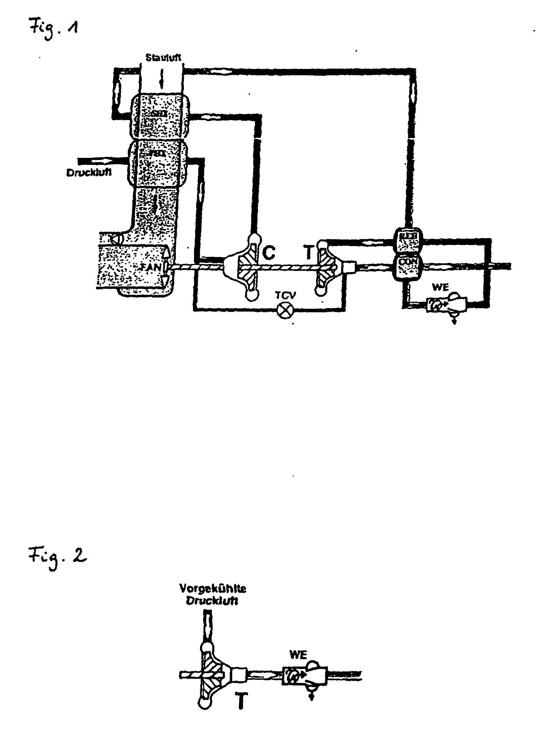

Figur 1 zeigt ein derartiges Entfeuchtungssystem gemäß dem Stand der Technik. Es handelt sich dabei um einen Entfeuchtungsprozess mit indirekter Nutzung der Turbinenauslassluft. Bei dem hier dargestellten Entfeuchtungssystem strömt vorverdichtete Druckluft durch den Primärwärmetauscher PHX und wird anschließend in dem Verdichter C weiter verdichtet. Diese Luft durchströmt nun den Sekundärwärmetauscher SHX. Beide Wärmetauscher PHX und SHX sind im Stauluftkanal angeordnet und werden mit Umgebungsluft bzw. im Flugbetrieb mit Stauluft gekühlt. Die aus dem Sekundärwärmetauscher SHX austretende Luft strömt anschließend durch den Reheater REH und wird im nachgeschalteten Kondensor CON weiter abgekühlt. Hierbei wird ein Teil der in der Luft enthaltenen Feuchtigkeit kondensiert. Anschließend wird der auskondensierte Teil der Feuchtigkeit im Wasserabscheider WE abgeschieden. Die Luft wird nach Passieren des Wasserabscheiders WE und der kalten Reheater REH Seite in die Turbine T geführt, darin entspannt und dabei abgekühlt. Die abgekühlte Luft wird durch die kalte Seite des Kondensors CON geführt, wodurch die Luft auf der warmen Seite des Kondensors CON abgekühlt wird und ein Teil der Feuchtigkeit auskondensiert. Unabhängig davon können nach dieser Turbine T noch weitere Turbinenstufen folgen. In jedem Falle wird jedoch kalte Turbinenauslassluft zu Kondensationszwecken verwendet.

Ein derartiges Entfeuchtungssystem bringt den Nachteil mit sich, dass in Form eines Kondensors ein zusätzliches Bauteil notwendig ist, wodurch sich ein erhöhter Systembauraumbedarf aufgrund eingeschränkter Flexibilität in der Komponentenanordnung ergibt. Ein weiterer Nachteil besteht in zusätzlichen Druckverlusten durch den Kondensor CON sowie ein reduzierter thermodynamischer Systemprozesswirkungsgrad aufgrund der Wärmeübertragung am Turbinenauslass. Ein weiterer Nachteil besteht darin, dass in der Regel ein aufwendiges Kondensordesign (z. B. Bypass) notwendig ist, um die Vereisungsgefahr bzw. Blockade auf der warmen und kalten Seite zu reduzieren bzw. zu verhindern. Beispielsweise kann vorgesehen sein, dass die kalte Kondensoreinlasseite zur Vermeidung von Eisansätzen beheizbar ist. Insgesamt ergibt sich ein erhöhter Aufwand für den Vereisungsschutz aufgrund des Kondensors CON.

Ferner sind Entfeuchtungssysteme bekannt, die eine direkte Nutzung der Turbinenauslassluft vorsehen. Dabei wird Feuchtigkeit direkt nach der Turbine abgeschieden. Ein derartiges System ist ausschnittsweise in Figur 2 dargestellt.

Der Wasserabscheider WE ist der Turbine T nachgeschaltet. Hierbei muss die Temperatur der Turbinenauslassluft über 0°C liegen, um eine Vereisung im Wasserabschieder WE zu verhindern. Die Kondensation der Feuchtigkeit erfolgt in der Turbine aufgrund der Entspannung und der damit verbundenen Abkühlung. Dabei können auch weitere Turbinenstufen dem Wasserabscheider WE folgen. Ist dem Wasserabscheider WE keine weitere Turbine nachgeschaltet, so spricht man von Niederdruckwasserabscheidung.

Die direkte Nutzung der Turbinenauslassluft zur Entfeuchtung ist mit folgenden Nachteilen verbunden. Ist nur eine Turbinenstufe vorgesehen, handelt es sich also um die Niederdruckabscheidung, ergibt sich aufgrund des niedrigeren Druckniveaus am Turbinenauslass ein höherer Volumenstrom für die Wasserabscheidekomponenten, wozu entsprechend größere Komponenten vorgesehen werden müssen. Damit verbunden ist eine unerwünschte Zunahme von Gewicht und Abmessungen. Ein weiterer Nachteil besteht darin, dass Niederdruckwasserabscheider Wartung benötigen, Hochdruckwasserabscheider hingegen nicht.

Die Turbinenauslasstemperatur ist auf Werte größer 0°C limitiert, um Vereisung zu vermeiden. Um die geforderte Kühlleistung zu erbringen, muss diese limitierte Temperatur durch einen erhöhten Durchsatz kompensiert werden. Auch dies führt zu einer unerwünschten Zunahme von Gewicht und Baugröße.

Ferner kann vorgesehen sein, mindestens zwei Turbinenstufen vorzusehen (Hochdruckabscheidung). Um bei direkter Nutzung der Turbinenauslassluft zur Wasserabscheidung den Nachteil der limitierten Auslasstemperatur zu umgehen, sind bisher mindestens zwei Entspannungseinrichtungen notwendig, wobei zwischen den Stufen die Entfeuchtung durchgeführt wird. Diese zweite Stufe macht das System jedoch komplexer und ist mit zusätzlichem Aufwand (zwei Kühlmaschinen oder eine Kühlmaschine mit zwei Turbinenstufen), zusätzlichem Gewicht und reduzierter Zuverlässigkeit verbunden.

Aus der EP 1 112 930 A2 ist ein Klimatisierungssystem bekannt, das außer dem im Stauluftkanal angeordneten Wärmetauscher einen weiteren Kondensor vorsieht, der dazu dient, die in der abgezapften Triebwerksluft befindliche Feuchtigkeit zu kondensieren. Das Wasser wird sodann in einem Wasserabscheider abgezogen.

Die DE 199 35 918 A1 offenbart ein Klimatisierungssystem, bei dem zusätzlich zu dem als Kondensor wirkenden im Stauluftkanal befindlichen Wärmetauscher ein weiterer Kondensor vorgesehen ist, der zur weiteren Entfeuchtung der Zapfluft dient und von kalter Turbinenauslassluft einer ersten Entspannungsstufe durchströmt wird.

Aus der U.S. 6,128,909 ist ein weiteres Klimatisierungssystem bekannt, in dem zusätzlich zu dem im Stauluftkanal angeordneten Wärmetauscher ein weiterer Kondensor vorgesehen ist, der dazu dient, die einer Turbine zugeführte Luft weiter zu entfeuchten.

Die Druckschrift U.S. 4,963,174 offenbart ein Klimatisierungssystem, bei dem die Zapfluft in einem Verdampfer gekühlt wird, der Bestandteil eines geschlossenen Kühlkreislaufes ist. Das bei der Kühlung kondensierte Wasser wird in einem dem Verdampfer nachgeschalteten Wasserabscheider abgezogen.

Es ist daher die Aufgabe der vorliegenden Erfindung ein System zur Luftentfeuchtung bei einer luftgestützten Klimaanlage zur Verfügung zu stellen, das bauraum- und gewichtsoptimiert ist und bei dem gleichzeitig die Vereisungsproblematik vermieden werden kann.

Erfindungsgemäß wird diese Aufgabe durch eine Flugzeugklimaanlage mit den Merkmalen des Patentanspruchs 1 gelöst. Die Klimaanlage weist einen Verdichter zur Bereitstellung verdichteter Luft auf, wobei der Verdichter mit vorverdichteter Luft oder mit Umgebungs- oder Stauluft oder Kabinenluft beaufschlagt wird und diese Luft verdichtet, wobei der Verdichter auslassseitig mit dem Kondensor in Verbindung steht und wobei dem Kondensor der Wasserabscheider nachgeschaltet ist und der Wasserabscheider auslassseitig mit der Entspannungsstufe in Verbindung steht. Danach wird der Kondensor durch einen mit Umgebungsluft bzw. Stauluft oder einem sonstigen Fluid außer Prozessluft gekühlten Wärmetauscher (RAM Wärmetauscher) gebildet, dem druckluftseitig die verdichtete, zu entfeuchtende Luft zugeführt wird. Erfindungsgemäß weist die Klimaanlage einen weiteren Kondensor nicht auf, da der ohnehin im Stauluftkanal befindliche Wärmetauscher zu Kondensationszwecken herangezogen wird. Auf der Druckluftseite wird dem RAM Wärmetauscher die verdichtete, zu entfeuchtende Luft zugeführt. Die Betriebsbedingungen werden so gewählt, dass in dem RAM Wärmetauscher eine Kondensatbildung stattfindet und dass vorzugseise nahzu 100 % dieses Kondensats danach abgeschieden werden. Durch optimierte Wirkungsgrade des RAM Wärmetauschers sowie des Wasserabscheiders sowie einem erhöhten Druckniveau kann erreicht werden, dass keine weitere Entfeuchtung notwendig ist.

Ferner ist ein Reheater vorgesehen, der der Entspannungsstufe vorgeschaltet ist und der mit Warmluft beaufschlagt wird, um Restwasser in der der Entspannungsstufe zugeführten Luft zu verdampfen. Dies ist insbesondere dann von Vorteil, wenn eine dem Entfeuchtungsprozess nachgeschaltete Turbine die Luft auf unter 0°C entspannt. Der Reheater wird mit wärmerer Luft durchströmt, wodurch der nach dem Wasserabscheider verbleibende Wasseranteil verdampft und damit Vereisung in der Turbine verhindert wird. Die Menge der warmen Reheaterluft ist dabei deutlich geringer als die Druckluftmenge. Die Versorgung mit Warmluft kann in unterschiedlichen Varianten durchgeführt werden.

Der Reheater steht auf seiner Warmluftseite einlasseitig mit dem Drucklufteinlass des RAM Wärmetauschers und auslasseitig mit dem Einlass eines dem RAM Wärmetauscher druckluftseitig vorgeschalteten Verdichters in Verbindung.

Es ist eine Verdichterstufe vorgesehen, die druckluftseitig dem RAM Wärmetauscher vorgeschaltet ist. Die zu entfeuchtende Luft passiert somit nach dem Verdichter den RAM Wärmetauscher, in dem erfindungsgemäß die Kondensation stattfindet. In vorteilhafter Ausgestaltung werden die Verdichterstufe durch einen Verdichter und die Entspannungsstufe durch eine Turbine gebildet, die mit einem in dem Stauluftkanal angeordneten Lüfter eine 3-Rad-Maschine bilden.

Gemäß der Erfindung wird die verdichtete Luft durch eine Verdichterstufe bereitgestellt, die mit vorverdichteter Luft oder mit Umgebungs- bzw. Stauluft oder mit Kabinenluft beaufschlagt wird und diese Luft verdichtet. Die vorverdichtete Luft kann beispielsweise Zapfluft aus dem Triebwerk bzw. aus einem Hilfstriebwerk eines Flugzeuges sein.

In weiterer Ausgestaltung der vorliegenden Erfindung ist vorgesehen, dass dem RAM Wärmetauscher druckluftseitig ein Primärwärmetauscher vorgeschaltet ist.

Der RAM Wärmetauscher und der Primärwärmetauscher können im Stauluftkanal derart angeordnet sein, daß der Primärwärmetauscher seriell oder parallel zum RAM Wärmetauscher mit Umgebungsluft bzw. Stauluft enthaltender Kühlluft beaufschlagt wird.

Erfindungsgemäß ist auch ein sonstiges Kühlmedium bzw. Fluid außer Prozessluft einsetzbar.

In vorteilhafter Ausgestaltung sind der RAM Wärmetauscher und der Primärwärmetauscher im Stauluftkanal derart angeordnet dass der Primärwärmetauscher bereichsweise seriell und bereichsweise derart angeordnet sind, dass der Primärwärmetauscher unmittelbar mit Umgebungsluft bzw. Stauluft enthaltender Kühlluft beaufschlagt wird. Auf diese Weise lässt sich erreichen, dass die der Verdichterstufe zugeführte Druckluft auf ein Temperaturniveau abgekühlt wird, das unter dem liegt, das bei vollständiger serieller Verschaltung von RAM Wärmetauscher und Primärwärmetauscher zu erzielen wäre. Die geringe Temperatur an der Einlasseite der Verdichterstufe führt zu einer entsprechend geringeren Temperatur am Einlass des RAM Wärmetauschers und somit zu günstigeren Kondensationsbedingungen.

Es kann vorgesehen sein, dass der RAM Wärmetauscher im druckluftseitigen Auslassbereich auf der Stauluftseite keine Kühlrippen aufweist. Da für den Wärmeübertragungsgrad im Wesentlichen die Staulufttemperatur im druckluftseitigen Auslaßbereich eines Wärmetauschers maßgebend ist, ist es wichtig, dass dieser Bereich des Primärwärmetauschers mit möglichst kühler Luft beaufschlagt wird, was dadurch erreicht wird, dass der RAM Wärmetauscher auf der Stauluftseite im druckluftseitigen Auslaßbereich keine Kühlrippen aufweist.

Eine Erhöhung des Wirkungsgrades des RAM Wärmetauschers wird erreicht, indem dieser als Kreuz-Strömer, Doppel-Kreuz-Strömer, Kreuz-Gegen-Strömer und/oder Doppel-Parallel-Kreuz-Strömer ausgeführt wird. Der Doppel-Parallel-Keuz-Strömer wird zusätzlich mit einem sekundären Kühlmedium beaufschlagt.

Bei dem sekundären Kühlmedium kann es sich beispielsweise um Kabinenluft oder ein sonstiges Fluid handeln. Entsprechend sind in einer weiteren Ausgestaltung der vorliegenden Erfindung Mittel vorgesehen, durch die die Kabinenluft als Kühlluft dem RAM Wärmetauscher zuführbar ist.

In bevorzugter Ausgestaltung erfolgt die Zumischung der Kabinenluft stauluftseitig im druckluftseitigen Auslassbereich des RAM-Wärmetauschers.

Ferner kann eine Expansionsturbine zur Entspannung von Kabinenluft vorgesehen sein, wobei Mittel vorgesehen sind, durch die die entspannte Kabinenluft als Kühlluft dem RAM Wärmetauscher zuführbar ist.

In bevorzugter Ausgestaltung der vorliegenden Erfindung ist der RAM Wärmetauscher zweigeteilt, wobei der der druckluftseitigen Auslassseite zugewandte Wärmetauscherbereich mit der entspannten Kabinenluft beaufschlagt wird.

Grundsätzlich kann der RAM Wärmetauscher zweigeteilt sein, wobei der der druckluftseitigen Auslasseite zugewandte Wärmetauscherbereich mit Luft oder einem anderen Fluid beaufschlagt wird, deren Temperatur unter Umgebungsluft bzw. Staulufttemperatur liegt. Bei dieser sekundären Kühlluft bzw. Fluid kann es sich um Kabinenluft handeln. Bei der Ausführung mit sekundärer Kühlluft besteht die Möglichkeit, einen zweiten Wärmetauscher auf der druckluftseitigen Auslasseite des RAM Wärmetauschers nachzuschalten, wobei dieser zweite Wärmetauscher zum Beispiel mit Kabinenluft von 27°C gekühlt sein kann. Dieser zweite Wärmetauscher kann auch in den RAM Wärmetauscher integriert sein. Alternativ kann auch nur der Bereich der Druckluftauslasseite des RAM Wärmetauschers auf der Stauluftseite mit Kabinenluft zusätzlich gekühlt werden.

Die Kabinenluft wird dem RAM Wärmetauscher vorzugsweise nur am Boden bzw. bei niedrigen Flughöhen zugeführt. Aufgrund der niedrigen Staulufttemperatur und der geringen Umgebungsfeuchte im Flug bei größeren Flughöhen ist keine Kabinenluft mehr als Kühlluft notwendig. Damit in dieser Flugphase jedoch der gesamte stauluftseitige Querschnitt für den RAM Wärmetauscher genutzt werden kann, ist vorzugsweise die Zuführung von Stauluft und sekundärer Kühlluft, insbesondere Kabinenluft, in dem RAM Wärmetauscher nicht vollständig getrennt. Das heißt, der am Boden von der sekundären Kühlluft beaufschlagte Teil des RAM Wärmetauschers wird im Flug (bei abgestellter Kabinenluftzuführung) von Stauluft beaufschlagt.

Eine weitere Verbesserung der Kühlleistung kann dadurch erreicht werden, dass Mittel vorgesehen sind, mittels derer Wasser in den Kühlluftstrom des RAM Wärmetauschers einsprühbar ist, wobei das Wasser im Wasserabscheider angefallenes und/oder zusätzlich bereitgestelltes Wasser ist. Die Verdampfungsenthalpie des eingesprühten Wassers wird hierbei genutzt, um die Temperatur der Kühlluft bzw. der Umgebungs- oder Stauluft zu verringern, was die Kühlleistung entsprechend erhöht.

Das Wasser wird bevorzugt stauluftseitig im druckluftseitigen Auslassbereich des RAM Wärmetauschers eingesprüht. Es kann ferner vorgesehen sein, dass das Wasser sowohl im Umgebungsluft- bzw. Stauluftstrom als auch in den dem RAM-Wärmetauscher zugeführten Kabinenluftstrom eingesprüht wird. Der Wirkungsgrad kann durch eine effiziente Wassereinspritzung und/oder durch eine Erhöhung der Stauluftmenge verbessert werden.

Am Boden wird gemäß einer Ausführungsform die Kühlluft bzw. Umgebungs- oder Stauluft durch einen Lüfter FAN gefördert, der mittels einer gemeinsamen Welle mit dem Verdichter und der Turbine verbunden ist.

Gemäß einer weiteren Ausgestaltung der vorliegenden Erfindung ist im Stauluftkanal ein Lüfter vorgesehen, der nicht mit der Entspannungs- und Verdichterstufe in Verbindung steht und der mit einem Eigenantrieb ausgerüstet ist. Durch die Abkopplung des Lüfters von der Turbine wird erreicht, dass dem Verdichter die gesamte Turbinenleistung zur Verfügung steht, wodurch sich eine weitere Erhöhung der Verdichterleistung ergibt. Das dadurch erzielte erhöhte Druckniveau im RAM Wärmetauscher führt zu einem erhöhten Kondensationsgrad.

Der Lüfter kann durch einen separaten Motor und/oder Turbine angetrieben werden. Es kann vorgesehen sein, dass der Lüfter durch einen separaten Motor und/oder Turbine angetrieben wird und antriebsseitig durch eine Welle mit einem dem RAM Wärmetauscher vorgeschalteten Zusatzverdichter verbunden ist.

In einer bevorzugten Ausgestaltung der vorliegenden Erfindung ist vorgesehen, dass der Wasserabscheider in den druckluftseitigen Auslass des RAM Wärmetauschers integriert ist, so dass beide Komponenten eine Einheit bilden.

Auch kann vorgesehen sein, dass der Wasserabscheider dem RAM Wärmetauscher druckluftseitig nachgeschaltet ist und eine separate Baueinheit bildet.

In weiterer Ausgestaltung der vorliegenden Erfindung sind dem Wasserabscheider zwei oder mehr parallel oder seriell geschaltete Entspannungsstufen nachgeschaltet. Beispielsweise kann vorgesehen sein, dass eine Entfeuchtungseinheit von zwei Turbinen gemeinsam genutzt wird.

In weiterer Ausgestaltung der vorliegenden Erfindung ist ein mit einem Ventil verschließbarer und den Wasserabscheider umgehender Bypass vorgesehen, der mit dem Einlass der Entspannungseinheit in Verbindung steht. Bei größeren Flughöhen ist eine Entfeuchtung der Luft aufgrund der geringen Umgebungsfeuchte nicht erforderlich. Für diese Bedingungen kann die Effizienz des Systemprozesses durch den Bypass erhöht werden. Der mit dem Ventil versehene Bypass kann außer dem Wasserabscheider auch den Reheater umgehen. Durch das Öffnen des Bypass-Ventils wird der Wasserabscheider und der Reheater umgangen, wodurch die Druckverluste dieser Komponenten wegfallen und die Durchlässigkeit und Leistungsfähigkeit (Kühlleistung) des Systems entsprechend erhöht wird.

Bevorzugt ist der ein Ventil aufweisende Bypass derart angeordnet, dass er den druckluftseitigen Auslass des RAM Wärmetauschers mit dem Einlass der Entspannungseinheit verbindet.

Weitere Vorteile und Einzelheiten der vorliegenden Erfindung werden anhand eines in der Zeichnung dargestellten Ausführungsbeispiels näher erläutert. Es zeigen:
- Figur 1, 2:: Entfeuchtungssysteme gemäß dem Stand der Technik,
- Figur 3:: ausschnittsweise Darstellung des Entfeuchtungssystems mit Kondensation im RAM Wärmetauscher und anschließender Wasserabscheidung,
- Figur 4:: vollständiges Entfeuchtungssystem mit RAM Wärmetauscher als Kondensor und 3-Rad-Maschine,
- Figur 5:: Ausführung des RAM Wärmetauschers mit teils serieller, teils paralleler stauluftseitiger PHX-Anordnung,
- Figur 6:: unterschiedliche Ausführungsformen des RAM Wärmetauschers,
- Figur 7:: unterschiedliche Ausführungsformen der Reheater-Warmluftversorgung,
- Figur 8:: Entfeuchtungssystem mit motorgetriebenen RAM Lüftern und Bypass mit Ventil ATV und
- Figur 9:: Entfeuchtungssystem mit zwei 2-Rad-Maschinen mit den Turbinen vorgeschalteter, gemeinsamer Entfeuchtungseinheit.

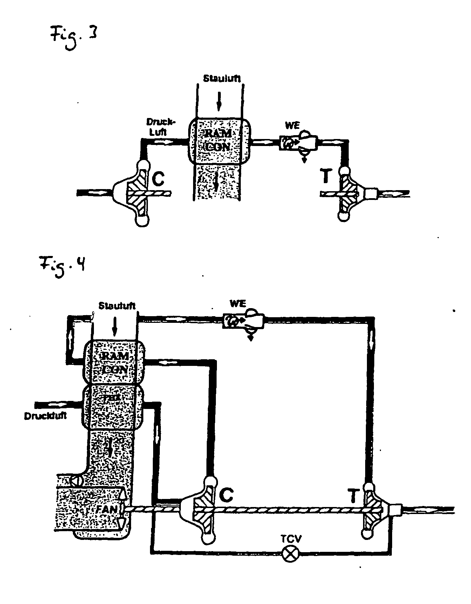

Die Ausführungsformen gemäß der Figuren 3, 4, 6a), 6b), 7b) - 7e) sind von der Erfindung nicht umfasst.

Figur 3 zeigt in einer ausschnittsweisen Darstellung die Entfeuchtung von Luft mittels eines Entfeuchtungssystems, das einen Verdichter C, eine Turbine T sowie einen dazwischen geschalteten RAM Wärmetauscher bzw. Kondensor RAM CON (RAM Wärmetauscher) und Wasserabscheider WE umfasst. Die Druckluft, die in der Regel aus den Triebwerken oder Hilfstriebwerken eines Flugzeuges abgezogen wird, wird dem Verdichter C zugeführt und darin weiter verdichtet. Die Luft wird anschließend durch den RAM Wärmetauscher RAM CON geführt und hierbei abgekühlt. Als Kühlluft dient Stauluft bzw. im Bodenbetrieb des Flugzeuges Umgebungsluft. Im RAM Wärmetauscher RAM CON wird die Druckluft abgekühlt und dabei Feuchtigkeit kondensiert. Das Kondensat wird nahezu zu 100 % im nachgeschalteten Wasserabscheider WE abgeschieden. Die Luft wird anschließend durch die Turbine geführt, hierbei entspannt und abgekühlt und der der Kabine vorgeschalteten Mischkammer zugeführt. Der dem RAM Wärmetauscher RAM CON druckluftseitig vorgeschaltete Verdichter C dient dazu, das für die Kondensation erforderliche hohe Druckniveau im RAM Wärmetauscher RAM CON zu erzeugen.

Figur 4 zeigt das Entfeuchtungssystem mit Primärwärmetauscher PHX und 3-Rad-Maschine. Die Druckluft wird im Primärwärmetauscher abgekühlt, in den Verdichter C geführt und darin weiter verdichtet. Anschließend strömt die Luft durch den RAM Wärmetauscher RAM CON. Dabei wird die Feuchtigkeit kondensiert. Das Kondensat wird im nachgeschalteten Wasserabscheider WE abgeschieden. Die Luft strömt anschließend durch die Turbine T, in der die Luft entspannt und dabei abgekühlt wird. Die Luft wird anschließend in die Kabine bzw. eine Mischkammer geführt. Zur Temperaturregelung ist ferner eine Leitung vorgesehen, die den Verdichter C einlasseitig mit der Auslasseite der Turbine T verbindet. In dieser ist ein Temperaturregelventil TCV vorgesehen.

Im Stauluftkanal ist ferner der Lüfter FAN angeordnet, der wie der Verdichter C durch die Turbine T angetrieben wird und mit diesen Komponenten eine 3-Rad-Maschine bildet.

In dem Ausführungsbeispiel gemäß Fig. 4 strömt die Stau- bzw. Umgebungsluft zunächst durch den RAM Wärmetauscher RAM CON und anschließend durch den seriell angeordneten Primärwärmetauscher PHX.

Die Vorteile eines erfindungsgemäßen Entfeuchtungssystems bestehen insbesondere darin, dass eine Komponente, nämlich der Kondensor CON bei indirekter Nutzung der Turbinenauslaßluft wegfällt. Im Vergleich zur direkten Nutzung der Turbinenauslassluft ist als weiterer Vorteil zu nennen, dass eine weitere Turbinenstufe wegfällt. Beides hat den Vorteil eines reduzierten Systembauvolumens, eines redzuierten Gewichtes, einer erhöhten Zuverlässigkeit und eines verbesserten System Prozesswirkungsgrades bei gleichzeitig geringeren Kosten. Darüber hinaus entfällt die bei vorbekannten Systemen bestehende Vereisungsproblematik am Kondensor.

Typische Anforderungen an ein Entfeuchtungssystem gemäß Figur 3 und 4 sind zum Beispiel eine Klimaanlagenauslassfeuchte von 7 g/kg bei einer Umgebungsfeuchte von 19 g/kg und 38°C Umgebungslufttemperatur. Dieser Entfeuchtungsgrad wird erreicht bei einem Druckniveau von 5,5 bar und 35°C am Auslass des RAM Wärmetauschers RAM CON sowie einem Wasserabscheidegrad von 96 % und RAM CON Wirkungsgrad von 96 %. Es sind jedoch auch andere Druck-Temperatur-Wirkungsgradkombinationen zur Erzielung des notwendigen Entfeuchtungsgrades wie zum Beispiel bei 6 bar und 37°C bei 97 % Abscheidegrad möglich.

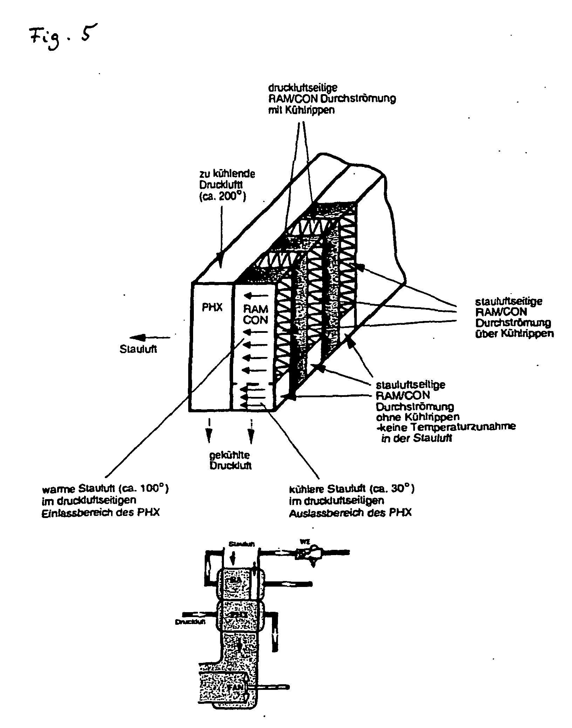

Die druckluftseitige Auslaßtemperatur des RAM Wärmetauschers RAM CON kann weiter abgesenkt werden, indem die druckluftseitige Einlaßtemperatur des RAM Wärmetauschers RAM CON reduziert wird. Dies kann dadurch erreicht werden, dass der Wirkungsgrad des druckluftseitig vorgeschalteten Primärwärmetauschers PHX erhöht wird. Gemäß Fig. 5 wird diese Wirkungsgradzunahme des PHX erreicht, indem der PHX stauluftseitig nicht vollständig seriell (siehe Fig. 4), sondern teils seriell und teils parallel zum RAM Wärmetauscher RAM CON angeordnet ist, wie dies in Fig. 5 dargestellt ist. Für den Wärmeübertragungsgrad ist im wesentlichen die Staulufttemperatur im druckluftseitigen Auslaßbereich eines Wärmetauschers maßgebend. Daher ist es wichtig, dass dieser Bereich stauluftseitig mit möglichst kühler Luft beaufschlagt wird. In dem Ausführungsbeispiel gemäß Fig. 5 wird dies für den Primärwärmetauscher PHX erreicht, indem der RAM Wärmetauscher RAM CON auf der Stauluftseite im druckluftseitigen Auslaßbereich keine Kühlrippen aufweist, wie dies in Fig. 5, oben dargestellt ist. Im Vergleich zu einer reinen seriellen Anordnung gemäß Fig. 4 erhält der Primärwärmetauscher PHX dadurch im druckluftseitigen Auslaßbereich deutlich kühlere Stauluft von z. B. 30°C anstatt ca. 100°C. Dabei ist ein stauluftseitiger Bypass des RAM Wärmetauschers RAM CON von ca. 10 % ausreichend, um die "normale" druckluftseitige PHX Auslaßtemperatur von z. B. 110 °C auf ca. 85°C abzusenken. Daraus ergibt sich, dass die Zunahme der Wärmeübertragung im PHX Wärmetauscher deutlich größer als die Abnahme der Wärmeübertragung im RAM Wärmetauscher RAM CON (aufgrund der 10 % kleineren RAM CON Stauluftmenge) ist. Je nach den tatsächlichen Anforderungen kann dieser "Bypass" des RAM Wärmetauschers RAM CON mittels Design auch größer oder kleiner als 10 % der gesamten Stauluftmenge gewählt werden.

Fig. 5, unten zeigt die schematische Darstellung der Wärmetauscherausführung mit teils serieller und teils paralleler stauluftseitiger Anordnung des PHX Wärmetauschers relativ zum RAM Wärmetauscher RA.

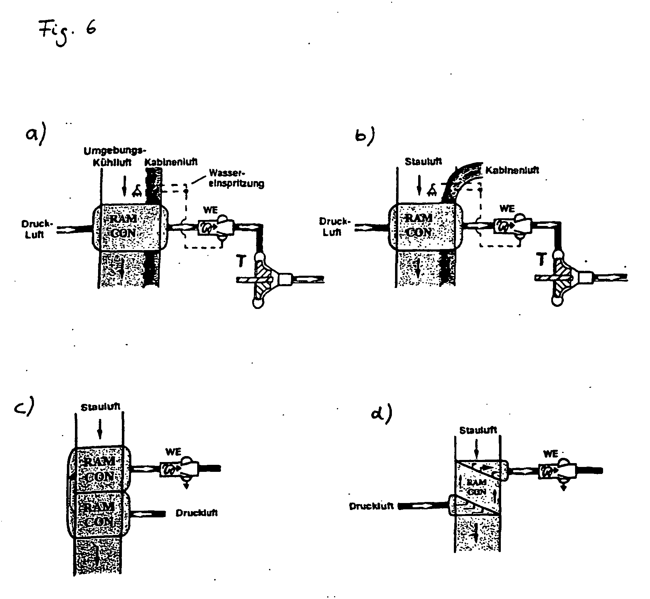

Figur 6 zeigt den RAM Wärmetauscher RAM CON in unterschiedlichen Ausführungsformen. Der RAM Wärmetauscher RAM CON kann als Doppel-Parallel-Kreuz-Strömer mit sekundärer Kühlluft ausgeführt sein. Dabei kann es sich beispielsweise um Kabinenluft handeln. Fig. 6 a, b zeigt eine derartige Ausführungsform. Hierbei wird der RAM Wärmetauscher RAM CON teilweise mit Kabinenluft und teilweise mit Umgebungs- bzw. Staukühlluft beaufschlagt. Auf der druckluftseitigen Auslaßseite des RAM Wärmetauschers kann ein zweiter Wärmetauscher nachgeschaltet sein, wobei dieser zweite Wärmetauscher zum Beispiel mit Kabinenluft von 27°C gekühlt wird. Dieser zweite Wärmetauscher kann auch in den RAM Wärmetauscher RAM CON integriert sein. Alternativ dazu kann auch nur der Bereich der Druckluftauslaßseite des RAM Wärmetauschers auf der Stauluftseite mit Kabinenluft zusätzlich gekühlt werden.

Der Wirkungsgrad des Wärmetrauschers RAM CON kann ebenfalls erhöht werden, indem dieser als Doppel-Kreuz-Strömer (Fig. 6 c) oder als Kreuz-Gegen-Strömer (Fig. 6 d) ausgeführt wird. In der Ausführungsform gemäß Fig. 6 c wird die Druckluft mit dem Stauluftstrom zweimal gekreuzt, bei der Ausführungsfrom gemäß Fig. 6 d wird die Druckluft teilweise im Gegenstrom zur Stauluft geführt.

Grundsätzlich ist es vorteilhaft, die Zuführung von Stauluft und Kabinenluft in dem RAM Wärmetauscher nicht vollständig zu trennen. Dies hat den Vorteil, dass in der Flugphase, in der, im Gegensatz zum Betrieb am Boden oder bei niedrigen Flughöhen, keine Entfeuchtung notwendig ist, da die Umgebungsfeuchte gering ist, der gesamte stauluftseite Querschnitt für den RAM Wärmetauscher für die Stauluft genutzt werden kann. In diesem Fall wird der am Boden bzw. in geringen Flughöhen von der Kabinenluft beaufschlagte Teil des RAM Wärmetauschers von Stauluft beaufschlagt.

Wie aus Fig. 6 a, b ersichtlich, wird in den Stauluft- bzw. Umgebungsluftstrom sowie in dem Kabinenluftstrom Wasser eingesprüht, das aus dem Wasserabscheider WE stammt. Damit wird die Verdampfungsentalphie des eingesprühten Wassers zusätzlich für Kühlzwecke genutzt. Es kann auch vorgesehen sein, zusätzlich zu dem im Wasserabscheider WE angefallenen Wasser, Wasser hinzuzuführen.

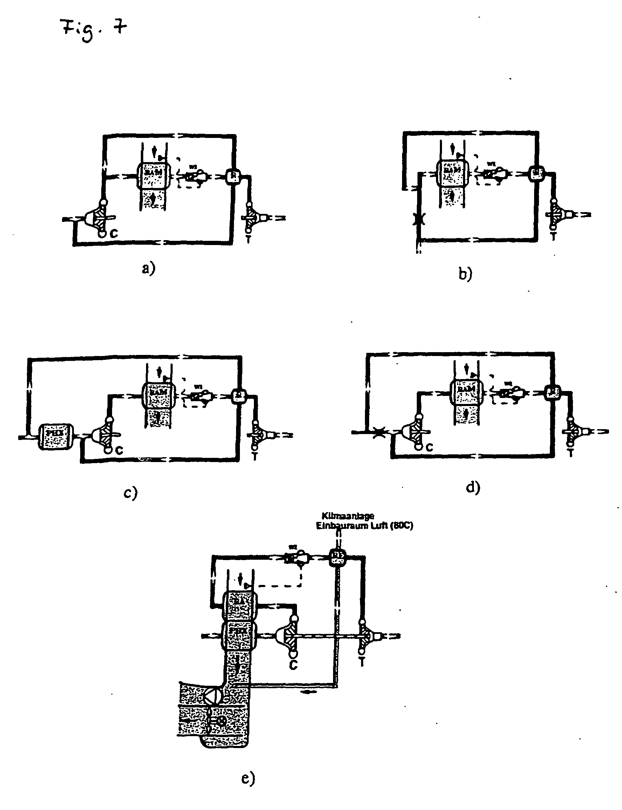

Fig. 7 zeigt ein Entfeuchtungssystem mit Reheater in unterschiedlichen Ausführungsformen. Falls eine dem Entfeuchtungsprozess nachgeschaltete Turbine die Luft auf unter 0°C entspannt, wird dem Entfeuchtungsprozess vorzugsweise ein Reheater nachgeschaltet. Darin wird der nach dem Wasserabscheider verbleibende Wasseranteil verdampft und damit die Vereisung der Turbine verhindert. Der Reheater kann in unterschiedlicher Art und Weise mit Warmluft versorgt werden. Gemäß Fig. 7 a steht der Reheater R einlaßseitig mit der Auslaßseite des Verdichters C in Verbindung, so dass ein Teil der verdichteten Luft nicht in den RAM Wärmetauscher RAM, sondern in den Reheater R geführt wird. Dieser steht auslaßseitig mit der Einlaßseite des Verdichters C in Verbindung.

Fig. 7 b zeigt eine Ausführungsform, bei der dem RAM Wärmetauscher RAM eine Drossel vorgeschaltet ist. Die Einlaßseite der Drossel steht mit der Einlaßseite des Reheaters R in Verbindung. Dessen Auslaßseite steht mit der Auslaßseite der Drossel in Verbindung, so dass der Druckabfall über die Drossel genutzt wird, um einen Teilstrom über den Reheater R zu leiten.

Fig. 7 c zeigt eine Ausführungsform, bei der der Reheater R einlaßseitig mit der Einlaßseite eines Primärwärmetauschers PHX in Verbindung steht. Die Auslaßseite des Reheaters R steht mit der Einlaßseite des dem Primärwärmetauschers PHX nachgeschalteten Verdichters C in Verbindung.

Fig. 7 d zeigt eine Ausführungsform, bei der dem Verdichter C eine Drossel vorgeschaltet ist. Einlaßseitig steht der Reheater R mit der Einlaßseite der Drossel in Verbindung und auslaßseitig mit der Auslaßseite der Drossel bzw. mit der Einlaßseite des Verdichters C.

In einer weiteren Ausführungsform gemäß Fig. 7 e steht der Reheater RE mit dem Einbauraum der Klimaanlage in Verbindung. Die daraus abgezogene Luft hat eine Temperatur von z. B. 80°C. Die Luft wird im Reheater RE abgekühlt und anschließend in den Stauluftkanal geführt. Hierin befindet sich der durch den Motor M angetriebene Lüfter.

Die Effizienzsteigerung des Systemprozesses durch den Wegfall des Kondensors CON ermöglicht einen höheren Energieumsatz in der Entspannungseinheit (Turbine), der für eine höhere Verdichtung in dem mit der Turbine verbundenen Verdichter genutzt werden kann. Das daraus resultierende höhere Druckniveau am Verdichterauslaß und im RAM Wärmetauscher verbessert die Kondensatbildung und reduziert die Strömungsdruckverluste.

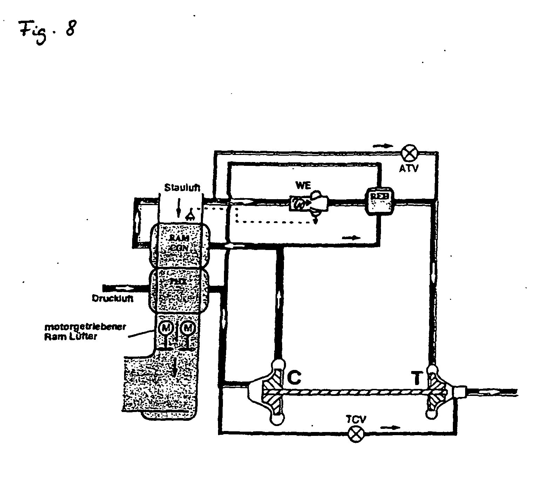

Das Druckniveau im RAM Wärmetauscher RAM CON kann weiter erhöht werden, in dem ein mit der Turbine und dem Verdichter verbundener RAM Lüfter abgekoppelt und dann z. B. elektrisch angetrieben wird. Eine derartige Ausführungsform ist beispielsweise in Fig. 7 e sowie in Fig. 8 dargestellt. Dadurch steht dem Verdichter die gesamte Turbinenleistung zur Verfügung, wodurch sich eine weitere Erhöhung der Verdichtungsleistung ergibt. Fig. 8 zeigt ein Entfeuchtungssystem, bei dem im Stauluftkanal zwei motorgetriebene RAM Lüfter vorgesehen sind. Der Verdichter C sowie die Turbine T sind von den Lüftern entkoppelt.

Fig. 8 zeigt ferner den Bypass mit Bypassventil ATV. Bei größeren Flughöhen ist eine Entfeuchtung der Luft aufgrund der geringen Umgebungsluftfeuchte nicht notwendig. Für diese Bedingungen kann die Effizienz des Systemprozesses durch den Bypass weiter erhöht werden. In dem Ausführungsbeispiel gemäß Fig. 8 umgeht der Bypass den Wasserabscheider WE und den Reheater REH. Der Bypass steht mit der Auslaßseite des RAM Wärmetauschers RAM CON sowie mit der Einlaßseite der Turbine T in Verbindung. Durch das Öffnen des Bypassventils ATV wird der Wasserabscheider WE und ein Reheater REH umgangen, wodurch die Druckverluste dieser Komponenten wegfallen, d. h. die Durchlässigkeit und Leistungsfähigkeit des Systems wird erhöht. Darüber hinaus zeigt Fig. 8 das Temperaturregelventil TCV, das je nach Bedarf geöffnet werden kann, um die Temperatur am Turbinenauslaß zu regeln. Es ist in einem Bypass angeordnet, der sich von der Einlaßseite des Verdichters C zur Auslaßseite der Turbine T erstreckt.

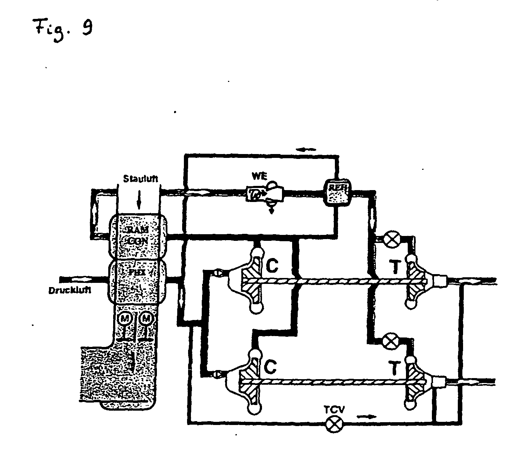

Fig. 9 zeigt eine Ausführungsform, bei der das erfindungsgemäße Entfeuchtungssystem für zwei Zweiradmaschinen genutzt wird. Die Druckluft strömt nach Passieren des Primärwärmetauschers PHX durch zwei parallel geschaltete Verdichter C und wird darin weiter verdichtet. Die Luft strömt nun teilweise durch den Reheater REH und zum großen Teil in den RAM Wärmetauscher RAM CON, in dem die Kondensation stattfindet. In dem nachgeschalteten Wasserabscheider WE wird das Wasser abgeschieden. Ein verbleibender Wasseranteil wird im Reheater REH verdampft. Die Druckluft strömt anschließend durch die beiden parallel geschalteten Turbinen T, die mit den jeweiligen Verdichtern C Zwei-Rad-Maschinen bilden. Ferner ist eine Bypassleitung mit dem Temperaturregelventil TCV vorgesehen, mittels derer die Temperatur am Turbinenauslaß geregelt werden kann.

## Patentansprüche

1. Flugzeugklimaanlage, die mit Luft als Prozessmedium betrieben wird, mit
von Prozessluft durchströmtem Kondensor, Wasserabscheider und Entspannungsstufe, wobei der Wasserabscheider der Entspannungsstufe vorgeschaltet ist,
und mit einem Verdichter zur Bereitstellung verdichteter Luft, wobei der Verdichter mit vorverdichteter Luft oder mit Umgebungs- oder Stauluft oder Kabinenluft beaufschlagt wird und diese Luft verdichtet, wobei der Verdichter auslassseitig mit dem Kondensor in Verbindung steht und wobei dem Kondensor der Wasserabscheider nachgeschaltet ist und der Wasserabscheider auslassseitig mit der Entspannungsstufe in Verbindung steht,
wobei der Kondensor durch einen mit Umgebungsluft bzw. Stauluft gekühlten, im Stauluftkanal befindlichen Wärmetauscher (RAM Wärmetauscher) (RAM CON) gebildet wird, dem druckluftseitig die in dem Verdichter verdichtete, zu entfeuchtende Luft zugeführt wird,
wobei die Flugzeugklimaanlage einen weiteren Kondensor nicht aufweist und
wobei ein Reheater (REH, R, RE) vorgesehen ist, der der Entspannungsstufe vorgeschaltet ist und der mit Warmluft beaufschlagt wird, um Restwasser in der der Entspannungsstufe zugeführten Luft zu verdampfen, wobei der Reheater (REH, R) auf seiner Warmluftseite einlaßseitig mit dem Drucklufteinlaß des RAM Wärmetauschers (RAM CON, RAM) und auslaßseitig mit dem Einlaß des dem RAM Wärmetauscher (RAM CON, RAM) druckluftseitig vorgeschalteten Verdichters (C) in Verbindung steht.

2. Flugzeugklimaanlage nach Anspruch 1, **dadurch gekennzeichnet, daß** dem RAM Wärmetauscher (RAM CON) druckluftseitig ein Primärwärmetauscher (PHX) vorgeschaltet ist.

3. Flugzeugklimaanlage nach Anspruch 2, **dadurch gekennzeichnet, daß** RAM Wärmetauscher (RAM CON) und Primärwärmetauscher (PHX) im Stauluftkanal derart angeordnet sind, daß der Primärwärmetauscher (PHX) seriell oder parallel zum RAM Wärmetauscher (RAM CON) mit Umgebungsluft bzw. Stauluft enthaltender Kühlluft beaufschlagt wird.

4. Flugzeugklimaanlage nach Anspruch 2, **dadurch gekennzeichnet, daß** RAM Wärmetauscher (RAM CON) und Primärwärmetauscher (PHX) im Stauluftkanal bereichsweise seriell und bereichsweise derart angeordnet sind, daß der Primärwärmetauscher (PHX) unmittelbar mit Umgebungsluft bzw. Stauluft enthaltender Kühlluft beaufschlagt wird.

5. Flugzeugklimaanlage nach Anspruch 4, **dadurch gekennzeichnet, daß** der RAM Wärmetauscher (RAM CON) im druckluftseitigen Auslaßbereich auf der Stauluftseite keine Kühlrippen aufweist.

6. Flugzeugklimaanlage nach einem der Ansprüche 1 bis 5, **dadurch gekennzeichnet, daß** der RAM Wärmetauscher (RAM CON) als Kreuz-Strömer, Doppel-Kreuz-Strömer, Kreuz-Gegen-Strömer und/oder Doppel-Parallel-Kreuz-Strömer ausgeführt ist.

7. Flugzeugklimaanlage nach einem der Ansprüche 1 bis 6, **dadurch gekennzeichnet, daß** Mittel vorgesehen sind, durch die Kabinenluft als Kühlluft dem RAM Wärmetauscher (RAM CON) zuführbar ist.

8. Flugzeugklimaanlage nach Anspruch 7, **dadurch gekennzeichnet, daß** die Zumischung der Kabinenluft stauluftseitig im druckluftseitigen Auslassbereich des RAM Wärmetauschers (RAM CON) erfolgt.

9. Flugzeugklimaanlage nach einem der Ansprüche 1 bis 8, **dadurch gekennzeichnet, daß** eine Expansionsturbine zur Entspannung von Kabinenabluft vorgesehen ist und daß Mittel vorgesehen sind, durch die die entspannte Kabinenluft als Kühlluft dem RAM Wärmetauscher (RAM CON) zuführbar ist.

10. Flugzeugklimaanlage nach Anspruch 9, **dadurch gekennzeichnet, daß** der RAM Wärmetauscher (RAM CON) zweigeteilt ist und daß der der druckluftseitigen Auslaßseite zugewandte Wärmetauscherbereich mit der entspannten Kabinenluft beaufschlagt wird.

11. Flugzeugklimaanlage nach einem der Ansprüche 1 bis 10, **dadurch gekennzeichnet, daß** der RAM Wärmetauscher (RAM CON) zweigeteilt ist und daß Mittel vorgesehen sind, durch die der der druckluftseitigen Auslaßseite zugewandte Wärmetauscherbereich mit Luft oder einem anderen Fluid beaufschlagt wird, deren Temperatur unter Umgebungsluft- bzw. Stauflufttemperatur liegt.

12. Flugzeugklimaanlage nach einem der Ansprüche 1 bis 11, **dadurch gekennzeichnet, daß** Mittel vorgesehen sind, mittels derer Wasser in den Kühlluftstrom des RAM Wärmetauschers (RAM CON) einsprühbar ist, wobei das Wasser im Wasserabscheider (WE) angefallenes und/oder zusätzlich bereitgestelltes Wasser ist.

13. Flugzeugklimaanlage nach Anspruch 12, **dadurch gekennzeichnet, daß** das Wasser bevorzugt stauluftseitig in dem der druckluftseitigen Auslassseite zugewandten Bereich des RAM Wärmetauschers (RAM CON) eingesprüht wird.

14. Flugzeugklimaanlage nach Anspruch 12 oder 13, **dadurch gekennzeichnet, daß** das Wasser sowohl im Umgebungsluft- bzw. Stauluftstrom als auch in einen dem RAM Wärmetauscher (RAM CON) zugeführten Kabinenluftstrom eingesprüht wird.

15. Flugzeugklimaanlage nach einem der Ansprüche 1 bis 14, **dadurch gekennzeichnet, daß** im Stauluftkanal ein Lüfter vorgesehen ist, der mit der Entspannungs- und Verdichterstufe in Verbindung steht.

16. Flugzeugklimaanlage nach einem der Ansprüche 1 bis 14 **dadurch gekennzeichnet, daß** im Stauluftkanal ein Lüfter vorgesehen ist, der nicht mit der Entspannungs- und Verdichterstufe in Verbindung steht und der mit einem Eigenantrieb ausgerüstet ist.

17. Flugzeugklimaanlage nach Anspruch 16, **dadurch gekennzeichnet, daß** der Lüfter durch einen separaten Motor (M) und/oder Turbine angetrieben wird.

18. Flugzeugklimaanlage nach Anspruch 16 oder 17, **dadurch gekennzeichnet, daß** der Lüfter durch einen separaten Motor (M) und/oder Turbine angetrieben wird und antriebsseitig durch eine Welle mit einem dem RAM Wärmetauscher (RAM CON) vorgeschalteten Zusatzverdichter verbunden ist.

19. Flugzeugklimaanlage nach einem der Ansprüche 1 bis 18, **dadurch gekennzeichnet, daß** der Wasserabscheider (WE) in den druckluftseitigen Auslaß des RAM Wärmetauschers (RAM CON) integriert ist, so daß beide Komponenten eine Einheit bilden.

20. Flugzeugklimaanlage nach einem der Ansprüche 1 bis 18, **dadurch gekennzeichnet, daß** der Wasserabscheider (WE) dem RAM Wärmetauscher (RAM CON) druckluftseitig nachgeschaltet ist und eine separate Baueinheit bildet.

21. Flugzeugklimaanlage nach einem der Ansprüche 1 bis 20, **dadurch gekennzeichnet, daß** dem Wasserabscheider (WE) zwei oder mehr parallel oder seriell geschaltete Entspannungsstufen nachgeschaltet sind.

22. Flugzeugklimaanlage nach einem der Ansprüche 1 bis 21, **dadurch gekennzeichnet, daß** ein mit einem Ventil (ATV) verschließbarer und den Wasserabscheider (WE) umgehender Bypass vorgesehen ist, der mit dem Einlaß der Entspannungseinheit in Verbindung steht.

23. Flugzeugklimaanlage nach Anspruch 22, **dadurch gekennzeichnet, daß** der Bypass mit Ventil (ATV) den Wasserabscheider (WE) sowie den Reheater (REH) umgeht.

24. Flugzeugklimaanlage nach Anspruch 22 oder 23, **dadurch gekennzeichnet, daß** der Bypass mit Ventil (ATV) den druckluftseitigen Auslaß des RAM Wärmetauschers (RAM CON) mit dem Einlaß der Entspannungseinheit verbindet.

## Claims

1. Aircraft air-conditioning system which is operated with air as process medium, having
condenser through which process air flows, water separator and expansion stage, the water separator being connected upstream of the expansion stage,
and having a compressor for providing compressed air, the compressor being supplied with precompressed air or with ambient or ram air or cabin air and compressing this air, the outlet side of the compressor being in communication with the condenser, and the water separator being connected downstream of the condenser and the outlet side of the water separator being in communication with the expansion stage,
the condenser being formed by a heat exchanger, which is cooled by ambient air or ram air, is located in the ram air duct (RAM heat exchanger) (RAM CON) and is supplied on the compressed-air side with the air that has been compressed in the compressor and is to be dehumidified,
the aircraft air-conditioning system not having a further condenser, and
a reheater (REH, R, RE) being provided, the reheater being connected upstream of the expansion stage and being supplied with hot air in order to evaporate residual water in the air fed to the expansion stage, the inlet side of the reheater (REH, R), on its warm-air side, being in communication with the compressed-air inlet of the RAM heat exchanger (RAM CON, RAM), and the outlet side of the reheater (REH, R), on its warm-air side, being in communication with the inlet of the compressor (C) connected upstream of the RAM heat exchanger (RAM CON, RAM) on the compressed-air side.

2. Aircraft air-conditioning system according to Claim 1, **characterized in that** a primary heat exchanger (PHX) is connected upstream of the RAM heat exchanger (RAM, CON) on the compressed-air side.

3. Aircraft air-conditioning system according to Claim 2, **characterized in that** RAM heat exchanger (RAM CON) and primary heat exchanger (PHX) are arranged in such a manner in the ram air duct that the primary heat exchanger (PHX) is supplied with cooling air containing ambient air or ram air in series or in parallel with the RAM heat exchanger (RAM CON).

4. Aircraft air-conditioning system according to Claim 2, **characterized in that** RAM heat exchanger (RAM CON) and primary heat exchanger (PHX) in the ram air duct are in regions arranged in series and in regions in such a manner that the primary heat exchanger (PHX) is supplied directly with cooling air containing ambient air or ram air.

5. Aircraft air-conditioning system according to Claim 4, **characterized in that** the RAM heat exchanger (RAM CON) does not have any cooling fins on the ram air side in the outlet region on the compressed-air side.

6. Aircraft air-conditioning system according to one of Claims 1 to 5, **characterized in that** the RAM heat exchanger (RAM CON) is designed as a cross-current heat exchanger, as a double-cross-current heat exchanger, as a cross-counter-current heat exchanger and/or as a double-parallel-cross-current heat exchanger.

7. Aircraft air-conditioning system according to one of Claims 1 to 6, **characterized in that** there are means by which cabin air can be fed as cooling air to the RAM heat exchanger (RAM CON).

8. Aircraft air-conditioning system according to Claim 7, **characterized in that** the cabin air is admixed on the ram air side in the outlet region of the RAM heat exchanger (RAM CON) on the compressed-air side.

9. Aircraft air-conditioning system according to one of Claims 1 to 8, **characterized in that** there is an expansion turbine for expanding cabin waste air and **in that** there are means which can be used to feed the expanded cabin air as cooling air to the RAM heat exchanger (RAM CON).

10. Aircraft air-conditioning system according to Claim 9, **characterized in that** the RAM heat exchanger (RAM CON) is divided in two, and **in that** the heat exchanger region which faces the outlet side on the compressed-air side is supplied with the expanded cabin air.

11. Aircraft air-conditioning system according to one of. Claims 1 to 10, **characterized in that** the RAM heat exchanger (RAM CON) is divided in two, and **in that** there are means which can be used to supply air or another fluid, the temperature of which is below ambient air temperature or ram air temperature, to the heat exchanger region which faces the outlet side on the compressed-air side.

12. Aircraft air-conditioning system according to one of Claims 1 to 11, **characterized in that** there are means which can be used to spray water into the cooling air stream of the RAM heat exchanger (RAM CON), the water being water which has collected in the water separator (WE) and/or additionally supplied water.

13. Aircraft air-conditioning system according to Claim 12, **characterized in that** the water is preferably sprayed in on the ram air side in the region of the RAM heat exchanger (RAM CON) which faces the outlet side on the compressed-air side.

14. Aircraft air-conditioning system according to Claim 12 or 13, **characterized in that** the water is sprayed both into the ambient air or ram air stream and into a cabin air stream fed to the RAM heat exchanger (RAM CON) .

15. Aircraft air-conditioning system according to one of Claims 1 to 14, **characterized in that** a fan which is in communication with the expansion and compressor stage is provided in the ram air duct.

16. Aircraft air-conditioning system according to one of Claims 1 to 14, **characterized in that** a fan which is not in communication with the expansion and compressor stage and is equipped with its own drive is provided in the ram air duct.

17. Aircraft air-conditioning system according to Claim 16, **characterized in that** the fan is driven by a separate motor (M) and/or turbine.

18. Aircraft air-conditioning system according to Claim 16 or 17, **characterized in that** the fan is driven by a separate motor (M) and/or turbine and on the drive side is connected by a shaft to an additional compressor connected upstream of the RAM heat exchanger (RAM CON).

19. Aircraft air-conditioning system according to one of Claims 1 to 18, **characterized in that** the water separator (WE) is integrated in the outlet of the RAM heat exchanger (RAM CON) on the compressed-air side, so that the two components form a single unit.

20. Aircraft air-conditioning system according to one of Claims 1 to 18, **characterized in that** the water separator (WE) is connected downstream of the RAM heat exchanger (RAM CON) on the compressed-air side and forms a separate structural unit.

21. Aircraft air-conditioning system according to one of Claims 1 to 20, **characterized in that** two or more expansion stages connected in parallel or in series are connected downstream of the water separator (WE).

22. Aircraft air-conditioning system according to one of Claims 1 to 21, **characterized in that** there is a bypass which can be closed by a valve (ATV), bypasses the water separator (WE) and is in communication with the inlet of the expansion unit.

23. Aircraft air-conditioning system according to Claim 22, **characterized in that** the bypass with valve (ATV) bypasses the water separator (WE) and the reheater (REH).

24. Aircraft air-conditioning system according to Claim 22 or 23, **characterized in that** the bypass with valve (ATV) connects the outlet of the RAM heat exchanger (RAM CON) on the compressed-air side to the inlet of the expansion unit.

## Revendications

1. Installation de climatisation pour aéronef, qui est amenée à fonctionner avec de l'air comme milieu de processus, avec
un condenseur traversé par l'air de processus, un séparateur d'eau et un étage de détente, où le séparateur d'eau est disposé en amont de l'étage de détente,
et avec un ventilateur pour la mise à disposition d'air comprimé, où le ventilateur est alimenté en air pré-comprimé ou en air environnant ou sous pression dynamique ou en air de cabine et comprime cet air, où le ventilateur, côté sortie est en liaison avec le condenseur, et où est disposé en aval du condenseur le séparateur d'eau, et le séparateur d'eau, côté sortie, est en liaison avec l'étage de détente,
où le condenseur est formé par un échangeur de chaleur (échangeur de chaleur RAM) (RAM CON) refroidi avec de l'air environnant respectivement sous pression dynamique, se trouvant dans le canal d'air sous pression dynamique, auquel est amené, côté air comprimé, l'air à comprimer dans le ventilateur, à déshumidifier,
où l'installation de climatisation de l'aéronef ne présente pas d'autre condensateur et
où un post-brûleur (REH, R, RE) est prévu qui est disposé en amont de l'étage de détente et qui est chargé en air chaud pour faire évaporer l'eau résiduelle dans l'air amené à l'étage de détente, où le post-brûleur (REH, R), sur son côté d'air chaud, est en liaison, côté entrée, avec l'entrée d'air comprimé de l'échangeur de chaleur RAM (RAM CON, RAM) et côté sortie avec l'entrée du ventilateur (C), disposé côté air comprimé, en amont de l'échangeur de chaleur RAM (RAM CON, RAM).

2. Installation de climatisation pour aéronef selon la revendication 1, **caractérisée en ce qu'**il est disposé en amont de l'échangeur de chaleur RAM (RAM CON), côté air comprimé, un échangeur de chaleur primaire (PHX).

3. Installation de climatisation pour aéronef selon la revendication 2, **caractérisée en ce que** l'échangeur de chaleur RAM (RAM CON) et l'échangeur de chaleur primaire (PHX) sont disposés dans le canal d'air comprimé de telle sorte que l'échangeur de chaleur primaire (PHX) est chargé d'une manière sérielle ou parallèle à l'échangeur de chaleur RAM (RAM CON) en air environnant respectivement en air de refroidissement contenant de l'air sous pression dynamique.

4. Installation de climatisation pour aéronef selon la revendication 2, **caractérisée en ce que** l'échangeur de chaleur RAM (RAM CON) et l'échangeur de chaleur primaire (PHX) sont disposés dans le canal d'air comprimé par zones de manière sérielle et par zones de telle sorte que l'échangeur de chaleur primaire (PHX) est chargé directement en air environnant respectivement en air de refroidissement contenant de l'air sous pression dynamique.

5. Installation de climatisation pour aéronef selon la revendication 4, **caractérisée en ce que** l'échangeur de chaleur RAM (RAM CON) ne présente pas de nervures de refroidissement dans la zone de sortie côté air comprimé au côté de l'air sous pression dynamique.

6. Installation de climatisation pour aéronef selon l'une des revendications 1 à 5, **caractérisée en ce que** l'échangeur de chaleur RAM (RAM CON) est réalisé comme dispositif d'écoulement en croix, comme dispositif d'écoulement en double croix, comme dispositif à contre-écoulement en croix et/ou comme dispositif d'écoulement en croix double parallèles.

7. Installation de climatisation pour aéronef selon l'une des revendications 1 à 6, **caractérisé en ce que** des moyens sont prévus par lesquels l'air de la cabine peut être amené en tant qu'air de refroidissement à l'échangeur de chaleur RAM (RAM CON).

8. Installation de climatisation pour aéronef selon la revendication 7, **caractérisée en ce que** l'ajout de l'air de la cabine a lieu, côté air sous pression dynamique, dans la zone de sortie côté air comprimé de l'échangeur de chaleur RAM (RAM CON).

9. Installation de climatisation pour aéronef selon l'une des revendications 1 à 8, **caractérisée en ce qu'**il est prévu une turbine d'expansion pour la détente de l'air d'échappement de la cabine, et **en ce que** des moyens sont prévus par lesquels l'air détendu de la cabine peut être amené comme air de refroidissement à l'échangeur de chaleur RAM (RAM CON).

10. Installation de climatisation pour aéronef selon la revendication 9, **caractérisée en ce que** l'échangeur de chaleur RAM (RAM CON) est en deux parties, et **en ce que** la zone de l'échangeur de chaleur orientée vers le côté sortie, côté air comprimé, est chargée en air de cabine détendu.

11. Installation de climatisation pour aéronef selon l'une des revendications 1 à 10, **caractérisée en ce que** l'échangeur de chaleur RAM (RAM CON) est en deux parties, et que des moyens sont prévus par lesquels la zone de l'échangeur de chaleur orientée vers le côté sortie, côté air comprimé, est chargée en air ou en un autre fluide dont la température se situe sous la température de l'air environnant respectivement de l'air sous pression dynamique.

12. Installation de climatisation pour aéronef selon l'une des revendications 1 à 11, **caractérisée en ce que** des moyens sont prévus au moyen desquels l'eau peut être projetée dans le flux de l'air de refroidissement de l'échangeur de chaleur RAM (RAM CON), où l'eau est de l'eau produite dans le séparateur d'eau (WE) et/ou mise à disposition additionnellement.

13. Installation de climatisation pour aéronef selon la revendication 12, **caractérisée en ce que** l'eau est projetée de préférence, côté air sous pression dynamique, dans la zone de l'échangeur de chaleur RAM (RAM CON) orientée vers le côté sortie, côté air comprimé.

14. Installation de climatisation pour aéronef selon la revendication 12 ou 13, **caractérisé en ce que** l'eau est projetée à la fois dans le flux d'air environnant respectivement d'air sous pression dynamique et aussi dans le flux d'air de la cabine amené à l'échangeur de chaleur RAM (RAM CON).

15. Installation de climatisation pour aéronef selon l'une des revendications 1 à 14, **caractérisée en ce qu'**il est prévu dans le canal d'air sous pression dynamique un aérateur qui est en liaison avec l'étage de détente et de ventilation.

16. Installation de climatisation pour aéronef selon l'une des revendications 1 à 14, **caractérisée en ce qu'**il est prévu dans le canal d'air sous pression dynamique un aérateur qui n'est pas en liaison avec l'étage de détente et de ventilation et qui est pourvu d'un dispositif d'entraînement propre.

17. Installation de climatisation pour aéronef selon la revendication 16, **caractérisée en ce que** l'aérateur est entraîné par un moteur séparé (M) et/ou une turbine.

18. Installation de climatisation pour aéronef selon la revendication 16 ou 17, **caractérisée en ce que** l'aérateur est entraîné par un moteur séparé (M) et/ou une turbine et est relié, côté entraînement, par un arbre à un ventilateur additionnel disposé en amont de l'échangeur de chaleur RAM (RAM CON).

19. Installation de climatisation pour aéronef selon l'une des revendications 1 à 18, **caractérisée en ce que** le séparateur d'eau (WE) est intégré dans la sortie côté air comprimé de l'échangeur de chaleur RAM (RAM CON) de sorte que les deux composants forment une unité.

20. Installation de climatisation pour aéronef selon l'une des revendications 1 à 18, **caractérisée en ce que** le séparateur d'eau (WE) est disposé en aval de l'échangeur de chaleur RAM (RAM CON) côté air comprimé, et forme une unité de construction séparée.

21. Installation de climatisation pour aéronef selon l'une des revendications 1 à 20, **caractérisée en ce que** sont disposés en aval du séparateur d'eau (WE) deux étages de détente ou plus montés en parallèle ou en série.

22. Installation de climatisation pour aéronef selon l'une des revendications 1 à 21, **caractérisée en ce qu'**il est prévu une dérivation pouvant être fermée par une soupape (ATV) et contournant le séparateur d'eau (WE), qui est en liaison avec l'entrée de l'unité de détente.

23. Installation de climatisation pour aéronef selon la revendication 22, **caractérisée en ce que** la dérivation avec la soupape (ATV) contourne le séparateur d'eau (WE) ainsi que le post-brûleur (REH).

24. Installation de climatisation pour aéronef selon la revendication 22 ou 23, **caractérisée en ce que** la dérivation avec la soupape (ATV) relie la sortie côté air comprimé de l'échangeur de chaleur RAM (RAM CON) avec l'entrée de l'unité de détente.
